# FASCICULE DE BREVET EUROPEEN

(11) **EP 1 432 260 B1**
(45) Date de publication et mention de la délivrance du brevet: **14.10.2015**
(21) Numéro de dépôt: 03293049.7
(22) Date de dépôt: 05.12.2003
(51) Int. Cl.: H04W 16/02

(54) **Système de transmission radioélectrique d'information entre une infrastructure et des mobiles**
Funkübertragungssystem für Informationen zwischen einer Infrastruktur und mobilen Stationen
System for transmission of radio information between an infrastructure and mobiles

(30) Priorité: 19.12.2002 FR 0216220
(43) Date de publication de la demande: 23.06.2004
(73) Titulaire: Siemens S.A.S., 93527 Saint-Denis Cedex (FR)
(72) Inventeur: Lardennois, Régis, 92542 Montrouge Cedex (FR); Chochois, Bénédicte, 92542 Montrouge Cedex (FR); Tousch, Roland, 92542 Montrouge Cedex (FR); Leboucher, Pascal, 92542 Montrouge Cedex (FR)
(74) Mandataire: Maier, Daniel Oliver

(56) Documents cités:
- EP-A- 0 618 688
- EP-A- 0 838 965
- DE-A- 19 630 575
- FR-A- 2 366 751

## Description

La présente invention concerne les systèmes cellulaires de transmission radioélectrique d'information entre une infrastructure et des mobiles assujettis à se déplacer suivant un trajet déterminé.

L'invention trouve une application particulièrement importante dans le domaine des transports en site propre, et en particulier dans les réseaux ferroviaires qui sont au moins en partie en tunnel, où les réflexions multiples sont particulièrement à craindre. Elle est toutefois également utilisable dans d'autres domaines, et notamment pour les liaisons avec les avions en vol ou au sol sur des itinéraires bien déterminés.

On connaît déjà (EP-A-0838965 et Brevet US 5 995 845) un système cellulaire de transmission radioélectrique d'information dont l'infrastructure a des stations fixes d'émission-réception réparties le long du trajet. Ces stations comportent des émetteurs-récepteur et chaque cellule est encadrée par deux émetteurs-récepteurs. Les émetteurs affectés à la même cellule sont synchronisés et émettent avec un codage permettant de tolérer ou d'utiliser les trajets multiples.

Le codage peut notamment être du type dit à multiplexage à répartition de fréquence et codage orthogonal (OC FDM) ou du type codage à étalement de spectre par séquence directe.

La présente invention vise notamment à augmenter encore l'immunité aux interférences. Dans ce but, l'invention propose notamment un système cellulaire de transmission radioélectrique d'information dont l'infrastructure comporte des stations fixes d'émission réception, ou bases radio, réparties le long du trajet et affectées à des cellules successives, de façon que chaque cellule soit munie d'au moins deux émetteurs-récepteurs, qui l'encadrent et dont les émetteurs sont synchronisés et émettent de préférence avec un codage permettant de tolérer ou d'utiliser les trajets multiples ; suivant l'invention les émetteurs-récepteurs des stations fixes et au moins un émetteur-récepteur porté par le mobile sont commandés de façon que les échanges entre le mobile et les émetteurs-récepteurs affectés à une même cellule soient effectués, lorsque le mobile est dans la cellule, en alternance à deux fréquences différentes lors de deux cycles radio successifs.

Une telle alternance permet de réduire les perturbations provoquées par des brouilleurs opérant à fréquence fixe, qui peuvent être des brouilleurs externes au système ou être constitués par les émetteurs d'autres cellules.

Chaque cycle sera habituellement constitué de plusieurs trames d'échange, relativement courtes pour augmenter la qualité des services. On utilisera fréquemment un mode de transmission à multiplexage temporel, dit TDMA ou AMRT. Les trames contenant une information essentielle peuvent être systématiquement émises sur les deux fréquences en succession. D'autres peuvent être émises une seule fois et d'autres encore répétées sur requête à la suite d'une transmission défectueuse.

La paire de fréquences utilisée dans une cellule sera avantageusement constituée de deux fréquences différentes de celles utilisées dans les cellules adjacentes. Dans les portions du réseau à l'air libre, où la portée des émetteurs peut être très élevée, on constituera avantageusement les paires de fréquences, à partir des fréquences disponibles, de façon que le même couple de fréquence ne soit réutilisé qu'à une distance aussi grande que possible. Lorsque l'on dispose d'un nombre réduit de fréquences, on cherchera à tous le moins à n'utiliser, dans des cellules susceptibles d'interférer, qu'une seule fréquence commune.

A une cellule donnée peuvent être affectés, en plus des deux émetteurs-récepteurs qui l'encadrent, des émetteurs récepteurs intercalaires répartis.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
la figure 1 est un schéma très simplifié montant une répartition dans l'espace des composants de stations fixes et de deux mobiles placés dans une cellule ;
la figure 2 est un schéma fonctionnel montrant les composants principaux d'un système ;
la figure 3 est un schéma destiné à montrer la façon dont s'effectue le transfert ou « hand over » d'une cellule à une autre ;
la figure 4 montre schématiquement le recouvrement des lobes d'émetteurs-récepteurs appartenant à deux cellules successives ;
la figure 5 est un diagramme montrant un exemple de gestion de transmission des trames au cours d'un cycle, depuis l'entrée d'un mobile dans une cellule jusqu'à sa sortie ;
la figure 6 donne un exemple de répartition de huit bandes de fréquences en paires ;
la figure 7 est un schéma montrant un croisement entre deux trajets et la façon dont sont gérées les transmissions dans la zone de croisement.

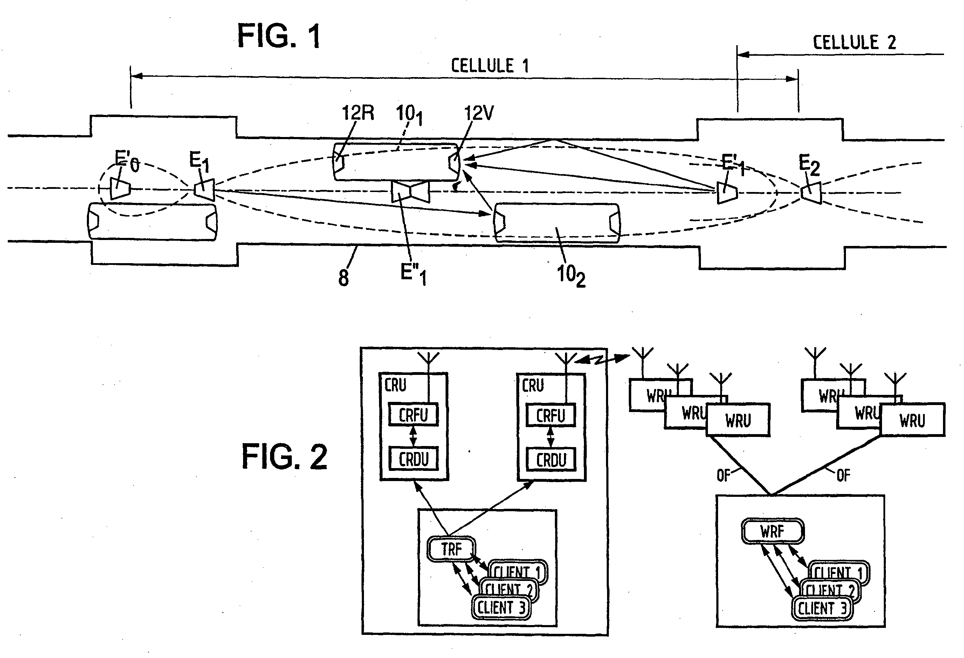

Avant de décrire l'invention, on rappellera brièvement la constitution d'un système à laquelle il s'applique, donné à titre d'exemple, en faisant référence à la figure 1.

La figure 1 montre une portion en tunnel 8 d'un système de transport ferroviaire à deux voies qui seront collectivement désignées par la suite comme la voie. Le long du trajet des voies sont réparties des stations de base de voie . Des cellules sont encadrées par deux stations de base. Chaque station de base comporte un émetteur-récepteur muni d'une antenne, à lobe étroit en tunnel ou sur des parties rectilignes. Les antennes des émetteurs-récepteurs E₁, E'₁ appartenant à deux stations de base émettent l'une vers l'autre dans la cellule n° 1 et présentent également un lobe arrière qui fait que la cellule déborde de l'intervalle entre les stations. Une ou des stations intermédiaires E"₁ seront souvent réparties à intervalles dans la cellule, entre les stations de base E₁ et E'₁. Les émetteurs-récepteurs affectés à une même cellule sont synchronisés au niveau symbole. Les émetteurs-récepteurs d'une cellule donnée émettent à la même fréquence de porteuse et constituent un canal commun.

Chaque station de base S placée d'un côté d'une cellule à laquelle elle est affectée, située d'un côté d'une cellule (par exemple cellule n° 1) est adjacente à une autre station ayant un émetteur-récepteur E'₀ ou E₂, affecté respectivement à la cellule 0 ou à la cellule 2. Dans le cas particulier indiqué schématiquement en tirets pour l'antenne de l'émetteur-récepteur E₁, chaque antenne présente un lobe principal avant relativement étroit, dirigé vers la cellule et un lobe arrière moins intense. Mais dans la pratique on optimisera les lobes des antennes en fonction de chaque localisation géographique. En écartant les stations radio de cellules différentes et en augmentant la zone de recouvrement entre cellules on peut réduire leur nombre.

Dans le mode de réalisation représenté, chaque mobile, tel que 10₁, 10₂, comporte une antenne d'émission-réception 12V dirigée vers l'avant et une antenne d'émission-réception 12R dirigée vers l'arrière. Comme on le verra plus loin, les antennes peuvent être associées à un appareillage d'émission-réception commun ou à des appareillages distincts. Chaque appareillage (ou l'appareillage) est prévu pour additionner les énergies reçues des émetteurs E₁ et E'₁, lorsque le mobile est dans la cellule n° 1.

Un système dans son ensemble peut avoir la constitution fonctionnelle générale indiquée en figure 2.

L'architecture de principe de la partie du système qui est porté par la voie (côté voie) peut être considéré comme ayant quatre sous-ensembles.

Un sous-ensemble de commande de cellule de voie WCC (abréviation pour Wayside Cell Controller) constitue un module hôte pour la fonction radio de voie WRF. Ce sous-ensemble de commande de cellule WCC peut comporter deux unités de transmission de voie WTU (Wayside Transmission Unit) pour assurer une redondance. Ces unités sont placées dans des locaux techniques et reliées :
- par des réseaux, qui utiliseront souvent un protocole Ethernet, à un contrôleur de zone Ze, qui peut lui-même être à redondance :
- à des postes clients de voie (utilisateurs de la transmission), de façon classique ;
- par des lignes de transmission placées le long la voie, généralement constituées par des liens à fibres optique EF, à des équipements radio de voie, dits wayside radio équipements, pouvant avoir deux unités radio de voie WRU.

De plus un lien de synchronisation non représenté est prévu entre les unités de transmission de voie WTU d'une même cellule.

Toutes les unités radio de voie d'une même cellule peuvent être reliées à une même carte électronique d'interface de fibre optique, dans l'unité de transmission de voie WTU.

La liaison entre les antennes des unités radio de voie WRU et les antennes des émetteurs-récepteurs 12V, 12R des mobiles 10 s'effectue en hyperfréquence ou micro-ondes, généralement dans une bande réservée aux applications à étalement de spectre. La fréquence sera généralement comprise entre 2400 et 2483 MHz ou entre 5725 et 5850 MHz.

Suivant le degré de disponibilité recherché pour la transmission on peut utiliser un émetteur récepteur à une ou deux antennes ou deux émetteurs-récepteurs couplés attaquant une même antenne ou des antennes respectives.

L'équipement CRU embarqué sur un mobile (tel qu'un train par exemple) sera plus au moins complexe selon la constitution du train.

Si on peut placer des antennes sur le toit du train, on cherchera à utiliser un seul équipement CRU au milieu du train.

Si, pour des raisons de gabarit, il n'est pas possible de placer d'antenne en toiture, on sera alors conduit à placer les antennes aux deux extrémités et donc à utiliser un équipement radio à chaque extrémité. Deux sous-ensembles, éventuellement sur les voitures de tête et de queue, assureront alors respectivement une fonction de répartition radio sur le mobile et une fonction de sélection de fréquence radio sur le mobile. Ces deux fonctions peuvent être remplies respectivement par un module de distribution radio CRDU et un module radio fréquence CRFU attaquant une ou des antennes.

En plus de la partie radio, le mobile porte une unité de commande embarquée assurant les fonctions de radio de la partie embarquée, désignées par TRF. Les liaisons avec les appareillage et logiciels telles que requêtes de communication, clients embarqués, etc. permettent de transférer les ordres et les informations transmises et réparties par l'intermédiaire de la fonction radio de train TRF.

Comme indiqué plus haut, les échanges dans une cellule entre les stations qui encadrent la cellule et un mobile qui se trouve dans la cellule s'effectuent sur deux fréquences différentes, alternant à chaque cycle radio. L'emploi de plus de deux fréquences peut être envisagé, mais il n'a qu'un intérêt réduit. En effet l'avantage, en matière de redondance, qu'apporteraient plus de deux fréquences pour le transfert des informations essentielles ne serait obtenu qu'en transmettant ces informations trois fois. De plus, étant donné que seules quelques fréquences sont disponibles, le nombre de combinaisons possibles évitant la présence de fréquence commune dans des cellules adjacentes serait réduit.

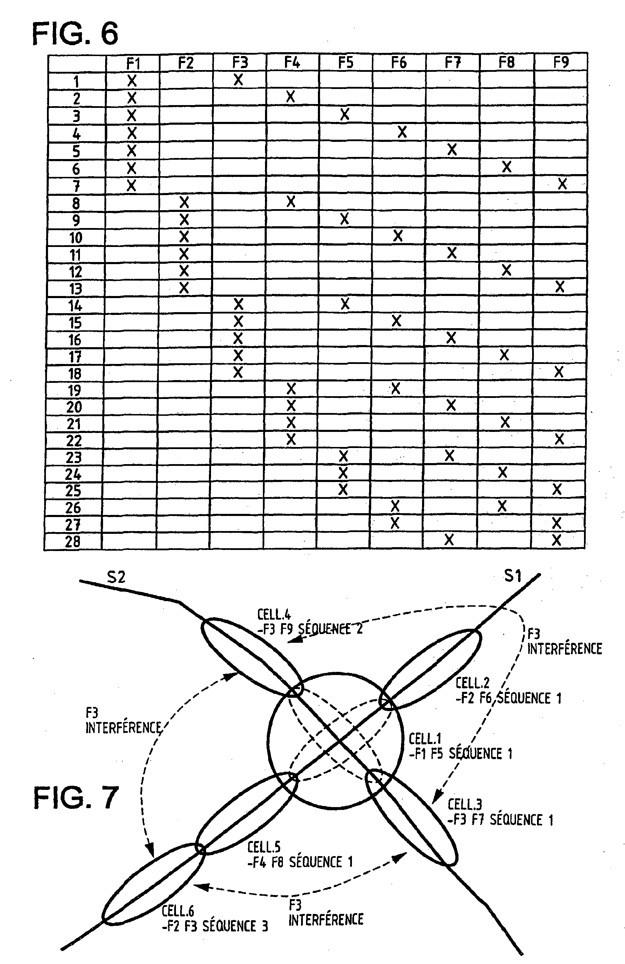

A titre d'exemple, dans le cas où la bande de fréquence disponible est de 83 MHz (ce qui est par exemple le cas de la bande d'instrumentation médicale scientifique ISM de 2400 à 2483 MHz) on peut fractionner cette bande en neuf canaux ayant des fréquences centrales F1 à F9. Ces canaux peuvent avoir une largeur de 6 MHz, laissant subsister un intervalle de 8 à 9 MHz pour réduire la contribution entre canaux adjacents. Deux de ces canaux non adjacents, ayant des fréquences Fx et Fy sont associés à chaque cellule. Il existe alors 28 paires pour lesquelles les deux fréquences ne sont pas adjacentes. La figure 6 montre une répartition possible.

La transmission sera généralement effectuée en modulation de phase à deux états ou quatre états, (dites BPSK ou QPSK), avec étalement de spectre à séquence directe ; on peut avantageusement utiliser le mode DQPSK avec quatre séquences d'étalement mutuellement orthogonales. La transmission peut s'effectuer en multiplex à répartition temporelle, dit AMRT ou TDMA, pour les liaisons radio.

Les échanges entre le mobile et les stations de la cellule s'effectuent par cycles avec alternance entre les deux fréquences Fx et Fy choisies pour la cellule. Chaque cycle est constitué de plusieurs trames. Dans chaque trame, la cadence sera généralement suffisamment réduite pour obtenir une résistance élevée au brouillage, à l'affaiblissement (fading) et aux trajets multiples. On utilisera fréquemment une cadence de 32 ou 64 Kbits par seconde bien qu'un débit plus élevé (jusqu'à 256 kbits/s) soit possible. Bien qu'en principe toutes les trames dans un même cycle radio soient émises à une seule et même fréquence, il peut être avantageux d'émettre une ou plusieurs des trames, dont le contenu a une importance essentielle, sur les deux fréquences successivement.

On peut notamment utiliser la répartition suivante dans un cycle, les trames de données ayant par exemple une longueur constante de 200 bits et le cycle une durée de 124 ms. Le cycle est découpé en tranches ou « slots » et la cadence est de 64 kbps.

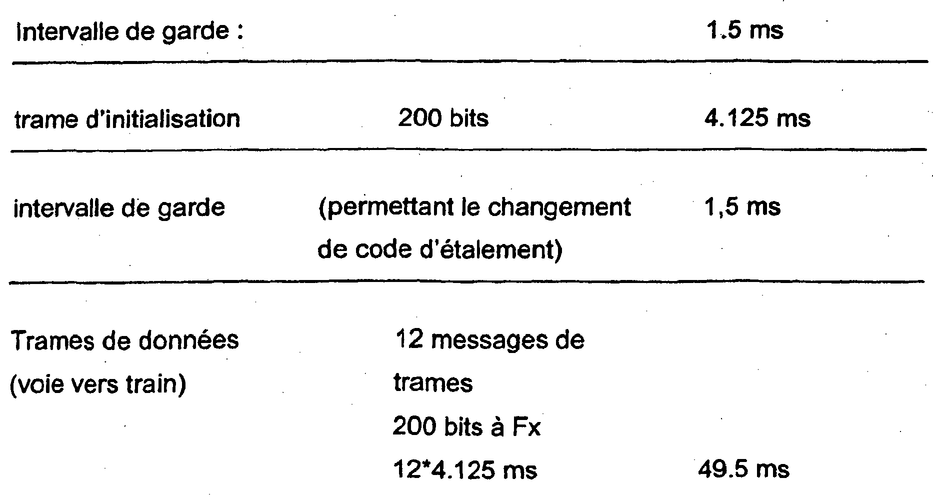

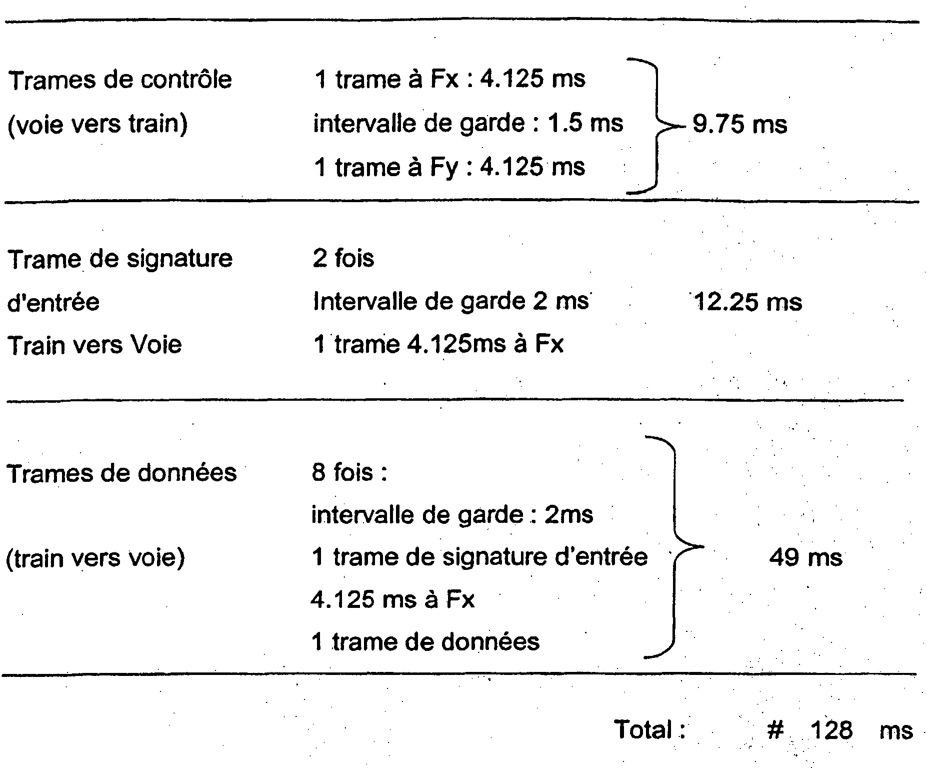

Seul le contenu applicatif des trames est chiffré. La trame de signature d'entrée peut être répétée en cas de mauvaise réception de la première transmission.

La trame d'initialisation constitue la base de données radio et n'est utilisée que par la partie radio du train pour se configurer.

Les trames de données vers les trains ont un contenu qui dépend de l'applicatif et du terminal « client » ou utilisateur sur le train. Elles sont chiffrées.

La trame de contrôle de cellule, utilisée par le partie radio du train pour se configurer, contient l'information de gestion, telle que l'allocation des tranches temporelles aux différents trains.

La trame de signature d'entrée est utilisée par le train qui pénètre dans une cellule pour s'identifier auprès de l'équipement radio de voie, constitué d'une ou deux unités WTU.

Enfin les trames de données vers la voie transfèrent des données d'application ; ces trames peuvent être transmises simultanément à deux cellules radio lorsque le train est dans la zone de recouvrement de deux cellules.

On décrira maintenant brièvement tout d'abord le passage de main ou « hand over » d'une cellule à une autre, puis un exemple de gestion des transferts depuis l'enregistrement d'entrée d'un train dans une cellule jusqu'à la sortie du train, qui n'est décelée que par l'absence de réponse du train aux interrogations.

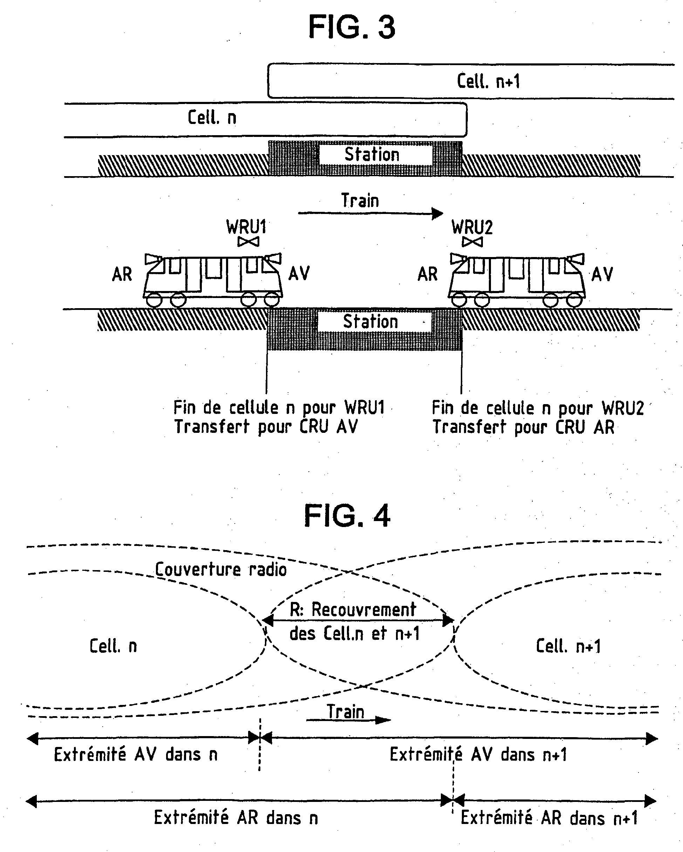

### Passage de main (figures 2 et 3)

Comme dans le cas du brevet antérieur déjà mentionné, le passage de main s'effectue en champ fort, dans une zone de recouvrement de deux cellules radio, indiquée par R. Les deux unités radio de train CRU AV et CRU AR du train effectuent successivement le transfert. L'unité CRU AV effectue le transfert des qu'elle dépasse l'unité de voie WRU 1 (position du train en traits pleins), là où le champ radio fréquence décroît puisqu'il y a passage dans le lobe arrière de CRU-AV. Puis l'unité CRU AR effectue le transfert à proximité de l'unité de voie WRU 2 (position en tirets).

On voit que le passage de main commence dès que le train dépasse la dernière unité de voie de la cellule qu'il quitte.

Le train signale le début du passage de main par envoi de la trame de signature. L'unité de transmission de voie inscrit alors le train dans la liste de ceux présents dans la cellule . Elle efface le train lorsque le défaut de réponse du train persiste au delà d'un délai déterminé (10 sec par exemple) ou d'un nombre d'interrogations déterminé (4 par exemple)

### Séquence d'évènements, de l'identification d'entrée à la sortie

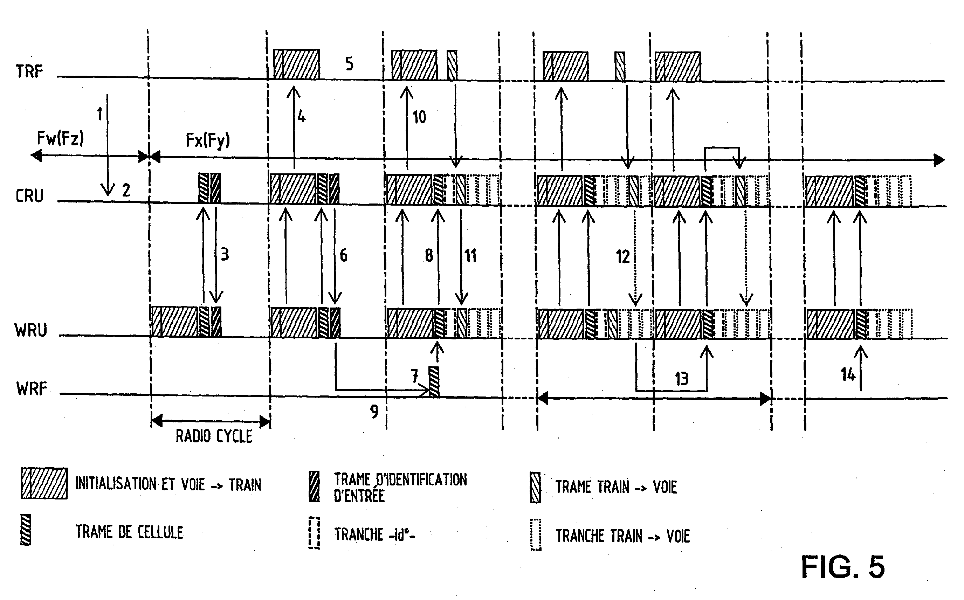

Une séquence type des évènements successifs de l'entrée à la sortie d'un train est donnée en figure 5 ; les unités concernées sont identifiées par leur abréviation
1 : TRF envoie la trame d'identification d'entrée pour demander la recherche par CRU dans la cellule, dont les fréquences Fx et Fy et la séquence d'étalement sont connues, et l'autorisation d'émettre.
2, 3, 4 : CRU explore les fréquences Fx et Fy pour détecter la trame de contrôle de cellule, s'enregistre et émet l'initialisation et les trames de données vers la voie.
5 : TRF utilise l'information de base de données contenue dans la trame d'initialisation
6, 8 : CRU est synchronisé sur le cycle radio de la nouvelle cellule, émet la trame d'identification d'entrée jusqu'à ce qu'il ait reçu une requête d'émission de trames de données vers la voie.
7 : WRF allocation au train d'une tranche dans la trame de contrôle de cellule, même si aucune application côté voie ne le demande ; attribution à cette tranche d'une priorité supérieure à celle des tranches requises par l'application de voie pour d'autres trains déjà présents dans la cellule.
9 : La fonction radio de voie WRF, généralement dans une unité WTU, inscrit le train dans la liste des trains présents dans la cellule, de façon que l'application côté voie puisse adresser des requêtes au nouveau train.
10, 11 : CRU émet vers TRF le contenu de toutes les trames de données de la voie vers le train ; réponse à toute requête provenant de la voie, dans la tranche allouée.
12, 13, 14 : en cas d'absence de réponse de train à une demande depuis la voie, répétition puis radiation du train de la liste de ceux présents dans la cellule.

La plupart des cas de collision de trames pouvant conduire à une non-transmission, qui peuvent se présenter, par exemple, lorsque deux trains se présentent simultanément en sens opposés à l'entrée d'une cellule; peuvent être résolus par des mesures courantes. Mais le traitement au croisement de plusieurs lignes requiert des mesures un peu plus complexe. La figure 7 montre le cas d'un croisement entre deux lignes S1 et S2. Sur la figure, les fréquences affectées aux différentes cellules 1 à 6 susceptibles d'interférer les unes avec les autres sont en nombre de sept. Les interférences possible sont indiquées par des flèches doubles en tirets. Dans le cas illustré, trois séquences d'étalement, indiquées par 1, 2 et 3, sont réparties entre les 7 cellules présentant un recouvrement des champs radio électriques.

On voit par ailleurs qu'il existe une cellule 1 commune aux deux lignes S1 et S2.

Les risques de confusion sont éliminés en combinant un choix approprié des fréquences et des différentes séquences d'étalement disponibles, en veillant à n'avoir qu'une seule fréquence commune de façon à réduire la probabilité d'interférence simultanée sur les deux fréquences d'une même cellule.

On constate que, dans le cas illustré, les séquences d'étalement sont différentes entre deux cellules susceptibles de présenter une interférence sur une fréquence commune.

On peut résumer le protocole d'allocation des tranches temporelles aux trains au cours d'un cycle de transmission radio électrique de la façon suivante.

On utilise pour cela des trames de contrôle de cellule, contenant une liste des trains aux quels est allouée une tranche temporelle ou créneau.

Dès qu'un train entre dans une cellule, le contrôleur de cellule de voie lui affecte une tranche temporelle, dès que le train s'est identifié en entrée (sign-in). Un protocole déterministe, utilisant par exemple la localisation des trains à l'aide de balises portées par la voie, peut être utilisé pour résoudre les conflits lorsque plusieurs trains cherchent à s'inscrire en même temps dans une cellule. Les tranches temporelles allouées aux trains sont changées de façon dynamique, à partir de la voie.

La sortie d'un train hors d'une cellule est détectée sans dialogue entre la voie et le train, simplement par non-réponse du train à des requêtes adressés depuis la voie.

Le contrôleur de cellule de voie, comportant une ou plusieurs unités de transmission de voie, peut être prévu pour demander au système embarqué de ré-emettre une information qu'il n'a pas reçu lors du cycle qui vient de se terminer, ce qui augmente la robustesse du système, sans augmenter le débit autant que le ferait une répétition systématique. 1

## Revendications

1. Système cellulaire de transmission radioélectrique d'information entre une infrastructure et des mobiles (10, 12) assujettis a se déplacer suivant un trajet déterminé, dont l'infrastructure comporte des stations fixes d'émission- réception (S) réparties le long du trajet et affectées à des cellules successives (cellule1, cellule2) et dont chaque mobile porte un émetteur-récepteur (12R, 12V), les émetteurs-récepteurs (E'O, E1 ; E'1, E2) des stations fixes et l'émetteur récepteur porté par chacun des mobiles sont commandés de façon que les échanges entre le mobile et les émetteurs-récepteurs (E1, E'1) affectés à une même cellule soient effectués, lorsque le mobile est dans la cellule (cellule1), en alternance à deux fréquences différentes (Fx, Fy) lors de deux cycles radio successifs.

2. Système suivant la revendication 1, dans lequel chaque cycle est constitué de plusieurs trames d'échange courtes.

3. Système suivant la revendication 1 OU 2, utilisant un mode de transmission à multiplexage temporel AMRT.

4. Système suivant la revendication 1 OU 2, dans lequel des trames contenant une information essentielle sont systématiquement émises sur les deux fréquences en succession.

5. Système suivant l'une quelconque des revendications précédentes,
dans lequel la paire de fréquences utilisée dans une cellule est constituée de deux fréquences différentes de celles utilisées dans les cellules adjacentes.

6. Système suivant selon l'une quelconque des revendications précédentes, dans lequel les échanges entre le train et un sous-système de voie s'effectuent en utilisant un multiplexage AMRT et un protocole d'allocation de tranches temporelles aux trains avec allocation d'une tranche à chaque train entrant dans une cellule depuis une unité de radio de voie en réponse à l'envoi d' une identification d'entrée par le train au sous-système de voie.

7. Système suivant la revendication 6, dans lequel la sortie du train hors d'une cellule est détectée par non-réponse répétée du train a une requête de l'unité radio de voie affectée à la cellule.

## Patentansprüche

1. Zellulares Funkübertragungssystem für Informationen zwischen einer Infrastruktur und mobilen Stationen (10, 12), die einer Bewegung entlang eines bestimmten Weges unterworfen sind, wobei die Infrastruktur feste Sende-Empfangs-Stationen (S) aufweist, die entlang des Weges verteilt sind und für aufeinanderfolgende Zellen (Zellel, Zelle2) bestimmt sind, und wobei jede mobile Station einen Sender-Empfänger (12R, 12V) trägt, wobei die Sender-Empfänger (E'0, E1; E'1, E2) der festen Stationen und der Sender-Empfänger, der von jeder der mobilen Stationen getragen wird, derart gesteuert werden, dass die Datenaustauschvorgänge zwischen der mobilen Station und den für ein und dieselbe Zelle bestimmten Sender-Empfängern (E1, E'1), wenn sich die mobile Station in der Zelle (Zelle1) befindet, in zwei aufeinander folgenden Funkzyklen abwechselnd bei zwei unterschiedlichen Frequenzen (Fx, Fy) durchgeführt werden.

2. System nach Anspruch 1, wobei jeder Zyklus aus mehreren kurzen Frames besteht.

3. System nach Anspruch 1 oder 2, welches eine Übertragung im Zeitmultiplexverfahren TDMA verwendet.

4. System nach Anspruch 1 oder 2, wobei Frames, welche eine wesentliche Information enthalten, systematisch nacheinander auf den zwei Frequenzen gesendet werden.

5. System nach einem der vorhergehenden Ansprüche,
wobei das Paar von Frequenzen, das in einer Zelle verwendet wird, aus zwei Frequenzen besteht, die von denjenigen verschieden sind, die in den benachbarten Zellen verwendet werden.

6. System nach einem der vorhergehenden Ansprüche, wobei die Datenaustauschvorgänge zwischen dem Zug und einem Gleis-Teilsystem unter Verwendung eines Multiplexverfahrens TDMA und eines Protokolls der Zuweisung von Zeitabschnitten zu den Zügen, mit Zuweisung eines Abschnitts zu jedem in eine Zelle einfahrenden Zug von einer Gleisfunkeinheit aus in Reaktion auf das Senden einer Einfahrtskennung durch den Zug an das Gleis-Teilsystem, durchgeführt werden.

7. System nach Anspruch 6, wobei die Ausfahrt des Zuges aus einer Zelle anhand einer wiederholten Nicht-Antwort des Zuges auf eine Anforderung seitens der für die Zelle bestimmten Gleisfunkeinheit erkannt wird.

## Claims

1. Cellular system for transmission of radio information between an infrastructure and mobiles (10, 12) constrained to move along a predetermined path, the infrastructure of which comprises fixed transceiver stations (S) distributed along the path and assigned to successive cells (cell1, cell2), and each mobile of which carries a transceiver (12R, 12V), the transceivers (E'0, E1; E'1, E2) of the fixed stations and the transceiver carried by each of the mobiles are controlled so that exchanges between the mobile and the transceivers (E1, E'1) assigned to the same cell are performed when the mobile is in the cell (cell1), alternately at two different frequencies (Fx, Fy) in two successive radio cycles.

2. System according to claim 1, wherein each cycle consists of several short exchange frames.

3. System according to claim 1 OR 2, using an AMRT time multiplex transmission mode.

4. System according to claim 1 OR 2, wherein frames containing essential information are systematically emitted on both frequencies in succession.

5. System according to one of the preceding claims, wherein the pair of frequencies used in a cell consists of two frequencies different from those used in the adjacent cells.

6. System according to one of the preceding claims, wherein the exchanges between the train and a track subsystem are performed using AMRT multiplexing and a protocol for allocating time slots to the trains with allocation of a slot to each train entering a cell from a track radio unit in response to the transmission of entry identification by the train to the track subsystem.

7. System according to claim 6, wherein the exit of the train from a cell is detected by the repeated failure of the train to respond to a request from the track radio unit assigned to the cell.
